# EUROPEAN PATENT SPECIFICATION

(11) **EP 4 145 319 B1**
(45) Date of publication and mention of the grant of the patent: **05.03.2025**
(21) Application number: 20933058.8
(22) Date of filing: 28.04.2020
(51) Int. Cl.: G06F 21/57

(54) **NODE.JS COMPONENT VULNERABILITY DETECTION METHOD AND SYSTEM**
VERFAHREN UND SYSTEM ZUR ERKENNUNG VON VERLETZLICHKEIT VON KNOTEN.JS-KOMPONENTEN
PROCÉDÉ ET SYSTÈME DE DÉTECTION DE VULNÉRABILITÉS DE COMPOSANTS NODE.JS

(43) Date of publication of application: 08.03.2023
(73) Proprietor: Seczone Technology Co., Ltd., Shenzhen, Guangdong 518000 (CN)
(72) Inventor: WANG, Jie, Shenzhen, Guangdong 518000 (CN); WAN, Zhenhua, Shenzhen, Guangdong 518000 (CN); WANG, Jie, Shenzhen, Guangdong 518000 (CN); DONG, Yan, Shenzhen, Guangdong 518000 (CN); LI, Hua, Shenzhen, Guangdong 518000 (CN)
(74) Representative: Chung, Hoi Kan
(86) International application number: PCT/CN2020/087399
(87) International publication number: WO 2021/217397

(56) References cited:
- CN-A- 108 763 928
- CN-A- 109 871 696
- CN-A- 110 392 028
- CN-A- 110 427 757
- US-A1- 2014 282 423
- US-A1- 2015 242 637
- BODIN CHINTHANET ET AL: "On The Lag of Library Vulnerability Updates: An Investigation into the Repackage and Delivery of Security Fixes Within The npm JavaScript Ecosystem", ARXIV.ORG, CORNELL UNIVERSITY LIBRARY, 201 OLIN LIBRARY CORNELL UNIVERSITY ITHACA, NY 14853, 8 July 2019 (2019-07-08), XP081439083
- NIELSEN BENJAMIN BARSLEV BARSLEV@CS AU DK ET AL: "Nodest: feedback-driven static analysis of Node.js applications", PROCEEDINGS OF THE 28TH ACM JOINT MEETING ON EUROPEAN SOFTWARE ENGINEERING CONFERENCE AND SYMPOSIUM ON THE FOUNDATIONS OF SOFTWARE ENGINEERING, ACM, NEW YORK, NY, USA, 12 August 2019 (2019-08-12), pages 455 - 465, XP058640543, ISBN: 978-1-4503-7043-1, DOI: 10.1145/3338906.3338933
- ADAM RAPLEY ET AL: "Mayall: A Framework for Desktop JavaScript Auditing and Post-Exploitation Analysis", ARXIV.ORG, CORNELL UNIVERSITY LIBRARY, 201 OLIN LIBRARY CORNELL UNIVERSITY ITHACA, NY 14853, 14 November 2018 (2018-11-14), XP081050236, DOI: 10.3390/INFORMATICS5040046

## Description

### Technical Field

The present invention relates to a vulnerability detection technology, and more particularly, to a method and system for detecting vulnerabilities of NODE.JS components.

### Background Art

At present, open source components are widely used by developers, and it is estimated that 80%-90% of each application is composed of open source components. Studies have shown that half of third-party components used in software applications are obsolete and may be insecure. Furthermore, more than 60% of all applications using open source components contain known software vulnerabilities. Then the CVE analysis of each open source component will provide an effective information support for software composition analysis (SCA). However, there is no relevant mature technology and product on the market. Therefore, in order to solve this problem, generally, vulnerabilities are detected manually, a relevant product official website is searched for relevant information according to the descriptions of the vulnerabilities, and then the vulnerabilities of a NODE.JS component are determined. However, manual review for vulnerabilities is labor intensive and inefficient.

"On The Lag of Library Vulnerability Updates: An Investigation into the Repackage and Delivery of Security Fixes Within The npm JavaScript Ecosystem" discloses both qualitative and quantitative approaches to conduct an empirical study on how 188 fixes were repackaged and delivered across over eight hundred thousand released of npm software clients hosted on GitHub.

"NODEST: Feedback-Driven Static Analysis of Node.js Applications" discloses a new feedback-driven static analysis that scales well to detect injection vulnerabilities in Node.js applications.

"Mayall: A Framework for Desktop JavaScript Auditing and Post-Exploitation Analysis" discloses the Mayall Framework, an extensible toolkit aimed at JavaScript security auditing and post-exploitation analysis. BODIN CHINTHANET ET AL: "On The Lag of Library Vulnerability Updates: An Investigation into the Repackage and Delivery of Security Fixes Within The npm JavaScript Ecosystem" discloses determining the time delay of fixes for known vulnerabilities by analysing github commits. NIELSEN BENJAMIN BARSLEV BARSLEV@CS AU DK ET AL: "Nodest: feedback-driven static analysis of Node.js applications" discloses a vulnerability analysis based on TAJS. ADAM RAPLEY ET AL: "Mayall: A Framework for Desktop JavaScript Auditing and Post-Exploitation Analysis" discloses providing an API to acquire vulnerability information. US 2015/242637 identifies software components affected by known vulnerabilities and provides possible mitigations.

### Summary of the Invention

In view of the technical problem to be solved by the present invention, a method and system for detecting vulnerabilities of NODE.JS components are provided, so as to quickly and efficiently detect vulnerabilities of NODE.JS components.

In order to solve the technical problem mentioned above, a method for detecting vulnerabilities of NODE.JS components is adopted as the technical solution, which includes the following steps:
collecting first basic vulnerability information from a NODE.JS vulnerability database;
parsing a package.json file to obtain key information of a NODE.JS component; and
extracting first target vulnerability information from the first basic vulnerability information according to the key information of the NODE.JS component.

The extracting first target vulnerability information from the first basic vulnerability information according to the key information of the NODE.JS component includes the following steps:
setting a key information priority according to the relevancy of the key information;
acquiring CVE information so as to collect CPE information; and
matching the key information of the NODE.JS component with the CPE information according to the key information priority to generate first target vulnerability information.

Optionally, after the extracting first target vulnerability information from the first basic vulnerability information according to the key information of the NODE.JS component, the method includes the following steps:
calculating a sha1 coded hash value of the NODE.JS component; and
matching the sha1 coded hash value of the NODE.JS component with the first target vulnerability information of NODE.JS to generate third target vulnerability information.

Further, after the matching the key information of the NODE.JS component with the CPE information to generate first target vulnerability information, the method also includes the following steps:
extracting a NODE.JS component name from the NODE.JS key information; and
determining a one-to-one correspondence between the NODE.JS component name and the CPE information; and compiling the first target vulnerability information.

Optionally, after the generating first target vulnerability information, the method also includes the following steps:
calling an interface of the NODE.JS component to acquire second target vulnerability information from the package.json file.

Further, the key information of the NODE.JS component includes name information of the NODE.JS component and edition information of the NODE.JS component. After the acquiring second target vulnerability information, the method also includes the following steps:
arranging npm vulnerability information by using retirejs to obtain second basic vulnerability information; and
matching the name information of the NODE.JS component and the edition information of the NODE.JS component with the second basic vulnerability information to generate third target vulnerability information.

Further, after the generating third target vulnerability information, the method also includes the following steps:
regularly downloading updated retirejs so as to analyze the third target vulnerability information, and generating fourth target vulnerability information.

Further, the extracting first target vulnerability information from the first basic vulnerability information according to the key information of the NODE.JS component specifically includes:
acquiring edition information, product names, and vendor information according to the key information of the NODE.JS component;
matching the edition information, the product names, and the vendor information with the CPE information respectively to obtain matching information; and
extracting corresponding CVE information according to the matching information,
the CVE information including a CVE number.

Specifically, the third target vulnerability information contains one or more types of vulnerability information, version number information, hazard level information, and CVE information.

The present application also provides a system for detecting vulnerabilities of NODE.JS components, which includes the following modules:
a collection module, configured to collect first basic vulnerability information from a NODE.JS vulnerability database;
a parsing module, configured to parse a package.json file to obtain key information of a NODE.JS component; and
a generation module, configured to extract first target vulnerability information from the first basic vulnerability information according to the key information of the NODE.JS component.

The present invention has the following beneficial effects. With the method for detecting vulnerabilities of NODE.JS components provided by the present invention, first basic vulnerability information can be collected from a NODE.JS vulnerability database, and possible vulnerability information of a NODE.JS component may be quickly obtained. A package.json file is a file in the NODE.JS component. When parsing the package.json file, the key information of the to-be-detected NODE.JS component can be obtained, thereby contributing to data call and arrangement. Thus, as only a small amount of key information needs to be detected, a large amount of vulnerability information will be obtained from the to-be-detected NODE.JS component. First target vulnerability information is hereby generated.

### Brief Description of the Drawings

A specific structure of the present invention will be described in detail with reference to the accompanying drawings.
Fig. 1 shows a method for detecting vulnerabilities of NODE.JS components in a first embodiment of the present invention.
Fig. 2 is a flowchart showing a step of extracting first target vulnerability information from first basic vulnerability information in a second embodiment of the present invention.
Fig. 3 is a schematic structural diagram of CVE.
Fig. 4 is a schematic structural diagram of CPE.
Fig. 5 is a table audited in a third embodiment of the present invention.
Fig. 6 is an audit result of a table audited in a third embodiment of the present invention.
Fig. 7 is a flowchart of acquiring third target vulnerability information in a fourth embodiment of the present invention.
Fig. 8 is a flowchart of acquiring third target vulnerability information in a fifth embodiment of the present invention.
Fig. 9 is a schematic diagram of second basic vulnerability information in a fifth embodiment of the present invention.
Fig. 10 is a result diagram of generating fourth target vulnerability information in a sixth embodiment of the present invention.
Fig. 11 is a structural diagram of a first embodiment of a system for detecting vulnerabilities of NODE.JS components according to the present invention.

### Detailed Description of the Invention

In order to explain the technical contents, structural features, realized objects and effects of the present invention in detail, the following description is made in conjunction with the implementations and the accompanying drawings.

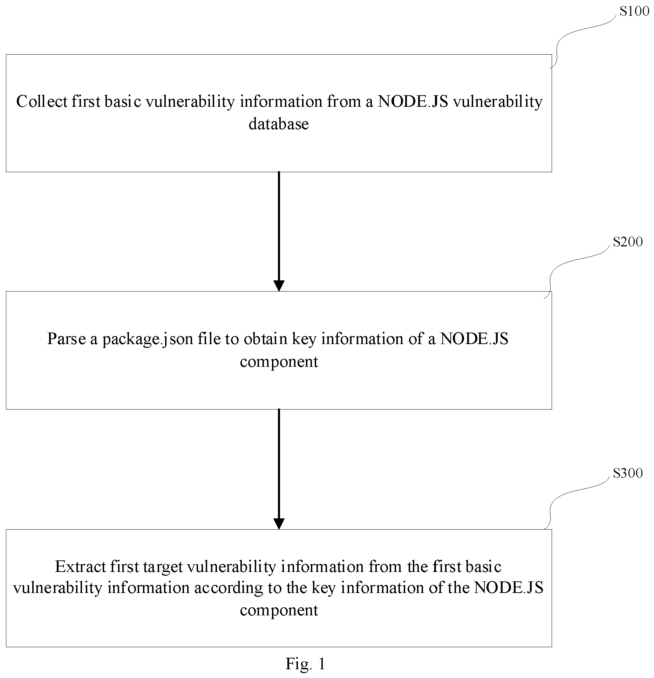

Reference is now made to Fig. 1. Fig. 1 shows a method for detecting vulnerabilities of NODE.JS components in a first embodiment of the present invention.

A method for detecting vulnerabilities of NODE.JS components includes the following steps:
Step S100: Collect first basic vulnerability information from a NODE.JS vulnerability database.
Step S200: Parse a package.json file to obtain key information of a NODE.JS component.
Step S300: Extract first target vulnerability information from the first basic vulnerability information according to the key information of the NODE.JS component.

With the method for detecting vulnerabilities of NODE.JS components provided by the present invention, the following functions may be realized: first basic vulnerability information is collected from a NODE.JS vulnerability database, and possible vulnerability information of a NODE.JS component is quickly obtained. A package.json file is a file in the NODE.JS component. When parsing the package.json file, the key information of the to-be-detected NODE.JS component can be obtained, thereby contributing to data call and arrangement. Thus, as only a small amount of key information needs to be detected, a large amount of vulnerability information will be obtained from the to-be-detected NODE.JS component. First target vulnerability information is hereby generated. In conclusion, the vulnerability information of NODE.JS components may be acquired more accurately to guarantee the efficiency and effect of vulnerability audit.

In a specific embodiment, step S200 of parsing a package.json file includes the following steps:
Step S201: Execute an npm install component name using a nodejs package management tool npm, and generate a node_modules folder and a package-lock.json file or an npm-shrinkwrap.json file.
Step S202: Acquire a referenced component according to the package-lock.json file or the npm-shrinkwrap.json file.
Step S203: Download other open source components to the node_modules folder.

With the above-mentioned method, both vulnerabilities of native codes of NODE.JS components and vulnerabilities of applied codes may be obtained. It will be appreciated that references may be by inheritance, encapsulation or otherwise.

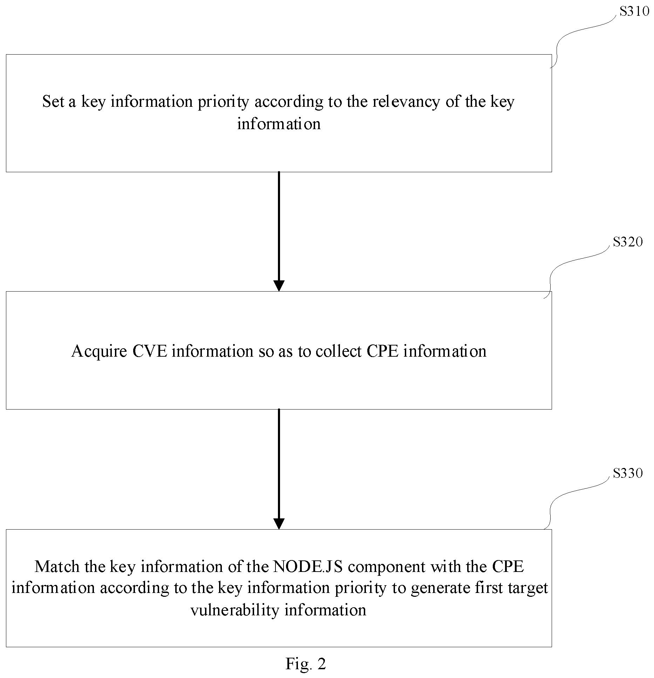

Specifically, reference is now made to Fig. 2. Fig. 2 is a flowchart showing a step of extracting first target vulnerability information from first basic vulnerability information in a method for detecting vulnerabilities of NODE.JS components in a second embodiment of the present invention. Step S300 of extracting first target vulnerability information from the first basic vulnerability information according to the key information of the NODE.JS component includes the following steps:
Step S310: Set a key information priority according to the relevancy of the key information.

The relevancy of the key information may be determined in various ways, may be set through the experience of programmers, and may also be determined according to specific software. In a specific embodiment, application edition information, product names, and vendor information are represented by vendor, product, and version in sequence. The application edition information, the product names, and the vendor information may be all in high priority, and have a certain priority difference.

In another embodiment, it may not be expressed directly with the above-mentioned method, but with a name field. At this moment, the name field may be either vendor or product, both in high priority. At this moment, the name field may be directly defined as high priority. Still other fields, such as Description, author, maintainers, homepage, or bugs, may be vendor in low priority.

Step S320: Acquire CVE information so as to collect CPE information.

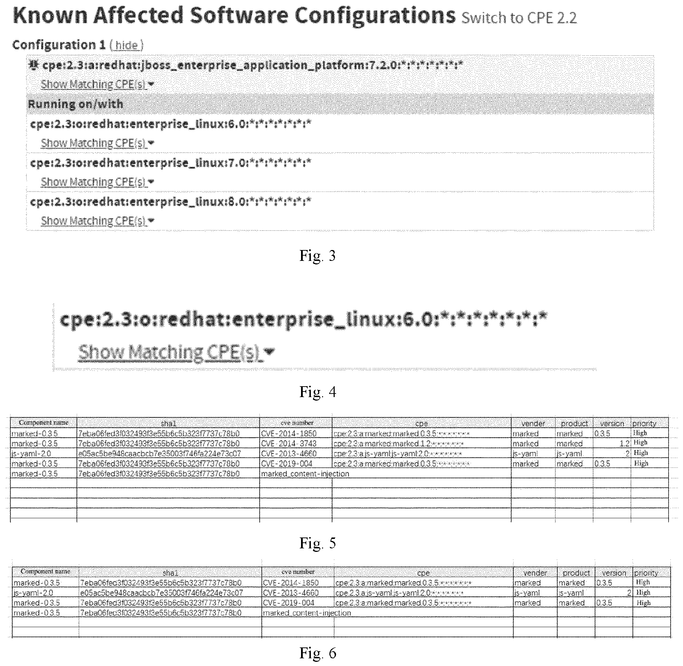

CVE is abbreviated from "Common Vulnerabilities & Exposures". CVE provides a common name for widely recognized information security vulnerabilities or weaknesses that have been exposed. With a common name, users may be assisted in data sharing in various vulnerability databases and vulnerability assessment tools respectively independent. The structure of CVE is shown in Fig. 3, and the CVE information may include a plurality of CPE configuration information.

It is to be understood that the structure thereof is as shown in Fig. 4, and it is to be understood that the format of CPE is as follows:
cpe:2.3:part:vendor:productversion:update:edition:language:sw_edition:target_sw:targ et_hw:other
where part represents a target type, and part may be any one of a, h, and o; vendor represents a vendor name; product represents a product name; version represents a version number; update represents an update package; edition represents edition information; and language represents a language item.

In this embodiment, part is a, representing vulnerability information of software, specifically a Node.js component.

Step S330: Match the key information of the NODE.JS component with the CPE information according to the key information priority to generate first target vulnerability information.

A series of values of application edition information, product names, and vendor information, and corresponding priorities thereof are parsed out and matched accordingly with vendor, product, and version in cpe information. The matching is performed in descending order of priority, i.e. from vendor, product, and version in high priority.

In a case where information in the same priority has a plurality of corresponding values, e.g. vendor, product, and version in high priority have a plurality of corresponding values, if vendor has cn and seczone, product has seczone, sca, and sdlc, and version has 1.0 and 2.0, mixed matching will be performed in each case.

In an embodiment, if vendor is cn, product is seczone, and version is 1.0, corresponding cpe is searched. After one of the above-mentioned vendor, product, and version is matched successfully, the other combinations in this high priority are continuously used to search for matched cpe. Finally, all matched cve information will be found according to the found cpe.

Low-priority information will be matched upon matching failure of high-priority information.

Further, step S300 of extracting first target vulnerability information from the first basic vulnerability information according to the key information of the NODE.JS component also includes the following steps:
Step S301: Acquire edition information, product names, and vendor information according to the key information of the NODE.JS component.
Step S302: Match the edition information, the product names, and the vendor information with the CPE information respectively to obtain matching information.

Since different editions of the NODE.JS component may have different codes and frameworks and may even only have a file name unchanged, NODE.JS component edition information is needed to better detect vulnerabilities. Different vendors may also name different software with the same name.

Step S303: Extract corresponding CVE information according to the matching information.

The CVE information includes a CVE number.

The CVE number is a number that identifies open vulnerabilities and is a number that addresses specific vulnerability issues.

Further, after matching the key information of the NODE.JS component with the CPE information to generate first target vulnerability information in step S330, the method also includes the following steps:
Step S331: Extract a NODE.JS component name from the NODE.JS key information.
Step S332: Determine a one-to-one correspondence between the NODE.JS component name and the CPE information.

It is to be understood that the CPE information and the CVE information are not in a one-to-one relationship, one type of CVE information may contain a plurality of types of CPE information, and one type of CPE information may exist among the plurality of types of CVE information. Based on this, duplicate information in the first target vulnerability information needs to be removed to ensure that a JS script file name corresponds to the CPE information on a one-to-one basis. In this embodiment, the first target vulnerability information is formed into a table, such as the table shown in Fig. 5, and the duplicate information is removed by auditing, either manually or by some procedures. The review results are shown in Fig. 6.

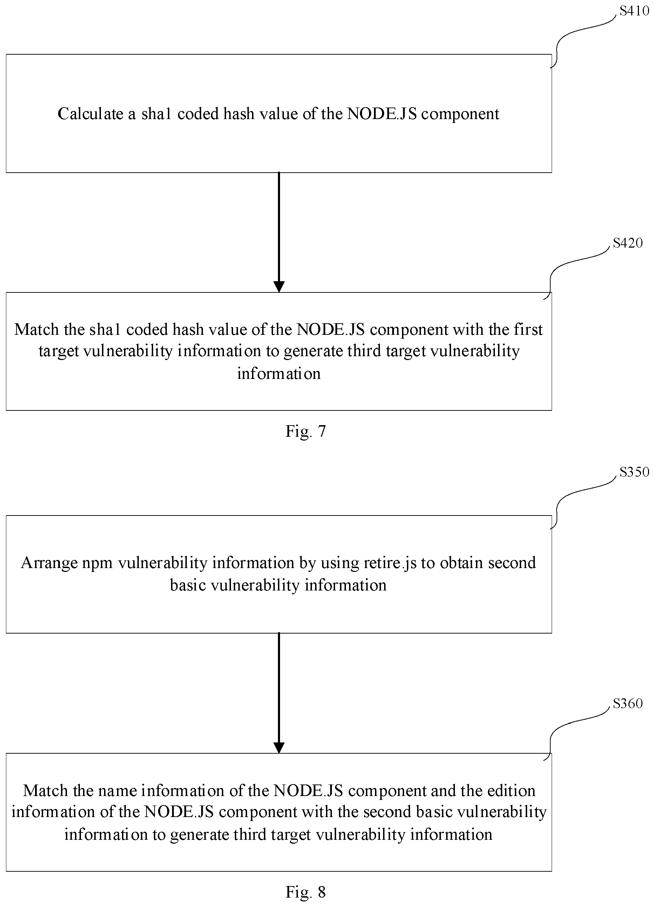

Further, reference is now made to Fig. 7. Fig. 7 is a flowchart of acquiring third target vulnerability information in a fourth embodiment of the present invention. After extracting first target vulnerability information from the first basic vulnerability information according to the key information of the NODE.JS component in step S300, the method includes the following steps:
Step S410: Calculate a sha1 coded hash value of the NODE.JS component.

The sha1 coded hash value is calculated by a JS script file through a hash algorithm. The hash algorithm may be applied to convert a binary with an arbitrary length into a hash value with a fixed length, and a corresponding file may be found quickly and easily by applying the hash value.

Step S420: Match the sha1 coded hash value of the NODE.JS component with the first target vulnerability information to generate third target vulnerability information.

In this embodiment, the sha1 coded hash value is directly called to match corresponding information in the first target vulnerability information, and thus vulnerabilities may be obtained quickly and accurately by parsing the NODE.JS component only once. Time consumed for scanning is saved, and the possibility of partial data analysis being inaccurate is also avoided.

In another embodiment, after generating first target vulnerability information in step S330, the method includes the following steps:
Step S340: Call an interface of the NODE.JS component to acquire second target vulnerability information from the package.json file.

In this embodiment, an interface officially provided by NODE.JS is called to search for other vulnerabilities, and the steps are similar to those described above and will not be described in detail herein. However, in this embodiment, the above-mentioned CVE vulnerability information may be obtained, some non-CVE vulnerability information may also be obtained, and second target vulnerability information may be formed by combining the information together. Compared with the first target vulnerability information, the second target vulnerability information has more comprehensive vulnerability data, which can guarantee the security of the NODE.JS component.

Further, the key information of the NODE.JS component includes name information of the NODE.JS component and edition information of the NODE.JS component. Reference is now made to Fig. 8. Fig. 8 is a flowchart of acquiring third target vulnerability information in a fifth embodiment of the present invention.

Step S350: Arrange npm vulnerability information by using retire.js to obtain second basic vulnerability information.

In this embodiment, vulnerabilities are still detected in a similar manner as those described above. However, there is also a difference. In this embodiment, the second basic vulnerability information simultaneously records the vulnerability information thereof by using a component name and a plurality of vulnerabilities. In the vulnerabilities, version number information thereof is represented by atOrAbove and below, a severity level is represented by severity, and the specific content of the vulnerabilities is represented by identifiers.

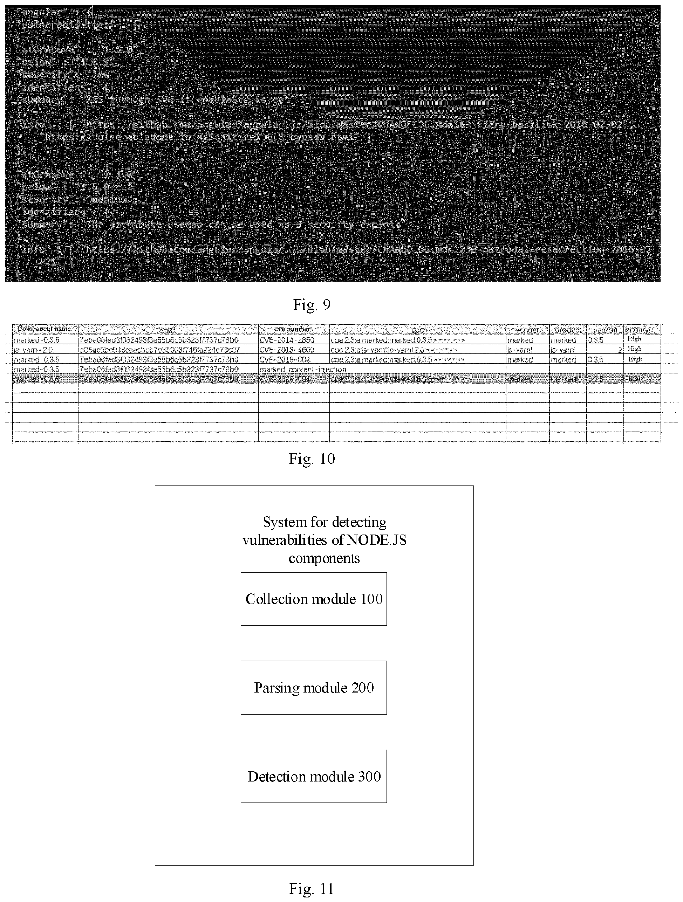

In this embodiment, there are component names: angular, hubot-scripts, connect, libnotify, etc., and one or more vulnerabilities may be set for each component name. In one of the vulnerabilities, atOrAbove represents that a version number is greater than or equal to a certain version number, and below represents that the version number is less than or equal to a certain version number, thereby dividing an interval. Within this interval, the vulnerability severity level within this interval is represented by severity, and the specific content of a vulnerability is represented by identifiers. If the vulnerability is a cve vulnerability, there will be a cve number. If the vulnerability is not a CVE vulnerability, a specific state of the vulnerability is generally described as shown in Fig. 9. Fig. 9 is a schematic diagram of second basic vulnerability information in a fifth embodiment of the present invention.

Step S360: Match the name information of the NODE.JS component and the edition information of the NODE.JS component with the second basic vulnerability information to generate third target vulnerability information.

In this embodiment, as the name information of the NODE.JS component and the edition information of the NODE.JS component are matched with the above-mentioned second basic vulnerability information according to a mapping rule, accurate and comprehensive vulnerability information may be obtained.

Optionally, after generating first target vulnerability information in step S360, the method also includes the following steps:
Step S370: Regularly download updated retirejs and/or package.json so as to analyze the third target vulnerability information, and generate fourth target vulnerability information. The third target vulnerability information contains one or more types of vulnerability information, version number information, hazard level information, and CVE information.

In a specific embodiment, the method includes the following steps:
Step S371: Make a regular downloading program.
Step S372: Regularly update retires and/or package.json by using the regular program. In this step, retires and package.json may be updated separately or simultaneously. Step S373: Modify or newly add vulnerability data for third target vulnerability information.
Step S374: Generate updated target vulnerability information, i.e. fourth target vulnerability information.

Thus, it is possible to ensure that vulnerability data keeps pace with the times, and this technical solution is less likely to lag behind the times. Specifically, as shown in Fig. 10, a vulnerability with a CVE number of CVE-2020-001 is updated data.

With reference to Fig. 11, the present application also provides a system for detecting vulnerabilities of NODE.JS components, which includes the following modules:
a collection module 100, configured to collect first basic vulnerability information from a NODE.JS vulnerability database;
a parsing module 200, configured to parse a package.json file to obtain key information of a NODE.JS component; and
a detection module 300, configured to extract first target vulnerability information from the first basic vulnerability information according to the key information of the NODE.JS component.

The above-mentioned modules are configured to carry the above-mentioned method. Any module, if implemented in the form of a software functional module and sold or used as an independent product, may be stored in a computer-readable storage medium. Based on such an understanding, the technical solution of the present invention, in essence or in part contributing to the related art or in whole or in part, may be embodied in the form of a software product. It will be appreciated that the method and system are applied to a computer-readable storage medium, which may be a memory. The computer-readable storage medium has a computer program stored thereon. Further, the computer-readable storage medium may be a U disk, a mobile hard disk, a read-only memory (ROM), a random access memory (RAM), a magnetic disk, or an optical disc, and other media which may store program codes.

It is to be noted that while the foregoing method embodiments have been described in terms of various combinations of acts for brevity, those skilled in the art will recognize that the present invention is not limited by the described order of acts, as some steps may, in accordance with the present invention, be performed in other orders or simultaneously. Furthermore, those skilled in the art will also recognize that the embodiments described in the description belong to preferred embodiments and that the acts and modules involved are not necessarily required of the present invention.

The above descriptions are only the embodiments of the present invention, and are not intended to limit the patent scope of the present invention. Any equivalent structure or equivalent process transformation made by using the contents of the description and drawings of the present invention, or directly or indirectly applied to other related technical fields, is similarly included in the scope of patent protection of the present invention.

## Claims

1. A method for detecting vulnerabilities of NODE.JS components, comprising the following steps:
collecting first basic vulnerability information from a NODE.JS vulnerability database (S100);
parsing a package.json file to obtain key information of a NODE.JS component (S200);
extracting first target vulnerability information from the first basic vulnerability information according to the key information of the NODE.JS component (S300); and
compiling the first target vulnerability information;
wherein the extracting first target vulnerability information from the first basic vulnerability information according to the key information of the NODE.JS component comprises the following steps:
setting a key information priority according to the relevancy of the key information (S310);
acquiring CVE information so as to collect CPE information (S320); and
matching the key information of the NODE.JS component with the CPE information according to the key information priority to generate first target vulnerability information (S330); and
wherein after the matching the key information of the NODE.JS component with the CPE information to generate first target vulnerability information, the method further comprises the following steps:
extracting a NODE.JS component name from the NODE.JS key information; and
forming the first target vulnerability information into a table to remove duplicate information by auditing, so as to determining a one-to-one correspondence between the NODE.JS component name and the CPE information.

2. The method for detecting vulnerabilities of NODE.JS components according to claim 1, wherein after the extracting first target vulnerability information from the first basic vulnerability information according to the key information of the NODE.JS component, the method comprises the following steps:
calculating a sha1 coded hash value of the NODE.JS component (S410); and
matching the sha1 coded hash value of the NODE.JS component with the first target vulnerability information of NODE.JS to generate third target vulnerability information (S420).

3. The method for detecting vulnerabilities of NODE.JS components according to claim 1, wherein after the generating first target vulnerability information, the method further comprises the following steps:
calling an interface of the NODE.JS component to acquire second target vulnerability information from the package.json file.

4. The method for detecting vulnerabilities of NODE.JS components according to claim 3, wherein the key information of the NODE.JS component comprises name information of the NODE.JS component and edition information of the NODE.JS component, and after the acquiring second target vulnerability information, the method further comprises the following steps:
arranging npm vulnerability information by using retirejs to obtain second basic vulnerability information (S350); and
matching the name information of the NODE.JS component and the edition information of the NODE.JS component with the second basic vulnerability information to generate third target vulnerability information (S360).

5. The method for detecting vulnerabilities of NODE.JS components according to claim 4, wherein after the generating third target vulnerability information, the method further comprises the following steps:
regularly downloading updated retirejs so as to analyze the third target vulnerability information, and generating fourth target vulnerability information.

6. The method for detecting vulnerabilities of NODE.JS components according to claim 1, wherein the extracting first target vulnerability information from the first basic vulnerability information according to the key information of the NODE.JS component specifically comprises:
acquiring edition information, product names, and vendor information according to the key information of the NODE.JS component;
matching the edition information, the product names, and the vendor information with the CPE information respectively to obtain matching information; and
extracting corresponding CVE information according to the matching information, wherein the CVE information comprises a CVE number.

7. The method for detecting vulnerabilities of NODE.JS components according to claim 4, wherein the third target vulnerability information contains one or more types of vulnerability information, version number information, hazard level information, and CVE information.

8. A system for detecting vulnerabilities of NODE.JS components, comprising the following modules:
a collection module (100), configured to collect first basic vulnerability information from a NODE.JS vulnerability database;
a parsing module (200), configured to parse a package.json file to obtain key information of a NODE.JS component; and
a generation module (300), configured to extract first target vulnerability information from the first basic vulnerability information according to the key information of the NODE.JS component and compile the first target vulnerability information;
wherein extracting first target vulnerability information from the first basic vulnerability information according to the key information of the NODE.JS component comprises:
setting a key information priority according to the relevancy of the key information (S310);
acquiring CVE information so as to collect CPE information (S320); and
matching the key information of the NODE.JS component with the CPE information according to the key information priority to generate first target vulnerability information (S330); and
wherein after matching the key information of the NODE.JS component with the CPE information to generate first target vulnerability information:
extracting a NODE.JS component name from the NODE.JS key information; and
forming the first target vulnerability information into a table to remove duplicate information by auditing, so as to determining a one-to-one correspondence between the NODE.JS component name and the CPE information.

## Patentansprüche

1. Ein Verfahren zum Erkennen von Schwachstellen von NODE.JS-Komponenten, das die folgenden Schritte umfasst:
Erfassen erster grundlegender Schwachstelleninformationen aus einer NODE.JS-Schwachstellendatenbank (S100);
Analysieren einer package.json-Datei, um Schlüsselinformationen einer NODE.JS-Komponente zu erhalten (S200); Extrahieren erster Zielschwachstelleninformationen aus den ersten grundlegenden Schwachstelleninformationen gemäß den Schlüsselinformationen der NODE.JS-Komponente (S300); und Zusammenstellen der ersten Zielschwachstelleninformationen;
wobei das Extrahieren erster Zielschwachstelleninformationen aus den ersten grundlegenden Schwachstelleninformationen gemäß den Schlüsselinformationen der NODE.JS-Komponente die folgenden Schritte umfasst:
Festlegen einer Schlüsselinformationspriorität gemäß der Relevanz der Schlüsselinformationen (S310);
Erfassen von CVE-Informationen, um CPE-Informationen zu sammeln (S320); und
Abgleichen der Schlüsselinformationen der NODE.JS-Komponente mit den CPE-Informationen gemäß der Schlüsselinformationspriorität, um erste Zielschwachstelleninformationen zu generieren (S330); und
wobei das Verfahren nach dem Abgleichen der Schlüsselinformationen der NODE.JS-Komponente mit den CPE-Informationen, um erste Zielschwachstelleninformationen zu generieren, weiterhin die folgenden Schritte umfasst:
Extrahieren eines NODE.JS-Komponentennamens aus den NODE.JS-Schlüsselinformationen; und
Bilden der ersten Zielschwachstelleninformationen in einer Tabelle, um durch Überprüfung doppelte Informationen zu entfernen, um eine Eins-zu-eins-Entsprechung zwischen dem NODE.JS-Komponentennamen und den CPE-Informationen zu bestimmen.

2. Verfahren zum Erkennen von Schwachstellen von NODE.JS-Komponenten nach Anspruch 1, wobei das Verfahren nach dem Extrahieren erster Zielschwachstelleninformationen aus den ersten grundlegenden Schwachstelleninformationen gemäß den Schlüsselinformationen der NODE.JS-Komponente die folgenden Schritte umfasst:
Berechnen eines sha1-codierten Hashwerts der NODE.JS-Komponente (S410); und
Abgleichen des sha1-codierten Hashwerts der NODE.JS-Komponente mit den ersten Zielschwachstelleninformationen von NODE.JS, um dritte Zielschwachstelleninformationen zu generieren (S420).

3. Verfahren zum Erkennen von Schwachstellen von NODE.JS-Komponenten nach Anspruch 1, wobei das Verfahren nach dem Generieren erster Zielschwachstelleninformationen ferner die folgenden Schritte umfasst:
Aufrufen einer Schnittstelle der NODE.JS-Komponente, um zweite Zielschwachstelleninformationen aus der Datei package.json abzurufen.

4. Verfahren zum Erkennen von Schwachstellen von NODE.JS-Komponenten nach Anspruch 3, wobei die Schlüsselinformationen der NODE.JS-Komponente Namensinformationen der NODE.JS-Komponente und Editionsinformationen der NODE.JS-Komponente umfassen, und nach dem Erfassen zweiter Zielschwachstelleninformationen das Verfahren ferner die folgenden Schritte umfasst:
Anordnen von npm-Schwachstelleninformationen unter Verwendung von retirejs, um zweite grundlegende Schwachstelleninformationen zu erhalten (S350); und
Abgleichen der Namensinformationen der NODE.JS-Komponente und der Editionsinformationen der NODE.JS-Komponente mit den zweiten grundlegenden Schwachstelleninformationen, um dritte Zielschwachstelleninformationen zu generieren (S360).

5. Verfahren zum Erkennen von Schwachstellen von NODE.JS-Komponenten nach Anspruch 4, wobei das Verfahren nach dem Generieren von Informationen zu dritten Zielschwachstellen ferner die folgenden Schritte umfasst:
regelmäßiges Herunterladen aktualisierter RetireJS, um die Informationen zu dritten Zielschwachstellen zu analysieren, und Generieren von Informationen zu vierten Zielschwachstellen.

6. Verfahren zum Erkennen von Schwachstellen von NODE.JS-Komponenten nach Anspruch 1, wobei das Extrahieren erster Zielschwachstelleninformationen aus den ersten grundlegenden Schwachstelleninformationen gemäß den Schlüsselinformationen der NODE.JS-Komponente insbesondere Folgendes umfasst:
Erfassen von Editionsinformationen, Produktnamen und Anbieterinformationen gemäß den Schlüsselinformationen der NODE.JS-Komponente;
Abgleichen der Editionsinformationen, der Produktnamen und der Anbieterinformationen jeweils mit den CPE-Informationen, um übereinstimmende Informationen zu erhalten; und Extrahieren entsprechender CVE-Informationen gemäß den Abgleichsinformationen, wobei die CVE-Informationen eine CVE-Nummer umfassen.

7. Verfahren zum Erkennen von Schwachstellen von NODE.JS-Komponenten gemäß Anspruch 4, wobei die dritten Zielschwachstelleninformationen eine oder mehrere Arten von Schwachstelleninformationen, Versionsnummerninformationen, Informationen zur Gefahrenstufe und CVE-Informationen enthalten.

8. Ein System zum Erkennen von Schwachstellen von NODE.JS-Komponenten, das die folgenden Module umfasst:
ein Erfassungsmodul (100), das zum Erfassen erster grundlegender Schwachstelleninformationen aus einer NODE.JS-Schwachstellendatenbank konfiguriert ist;
ein Analysemodul (200), das zum Analysieren einer package.json-Datei konfiguriert ist, um Schlüsselinformationen einer NODE.JS-Komponente zu erhalten; und
ein Generierungsmodul (300), das zum Extrahieren erster Zielschwachstelleninformationen aus den ersten grundlegenden Schwachstelleninformationen gemäß den Schlüsselinformationen der NODE.JS-Komponente und zum Kompilieren der ersten Zielschwachstelleninformationen konfiguriert ist;
wobei das Extrahieren erster Zielschwachstelleninformationen aus den ersten grundlegenden Schwachstelleninformationen gemäß den Schlüsselinformationen der NODE.JS-Komponente Folgendes umfasst: Festlegen einer Schlüsselinformationspriorität gemäß der Relevanz der Schlüsselinformationen (S310);
Erfassen von CVE-Informationen, um CPE-Informationen zu sammeln (S320); und
Abgleichen der Schlüsselinformationen der NODE.JS-Komponente mit den CPE-Informationen gemäß der Schlüsselinformationspriorität, um erste Zielschwachstelleninformationen zu generieren (S330); und
wobei nach dem Abgleichen der Schlüsselinformationen der NODE.JS-Komponente mit den CPE-Informationen zum Generieren erster Zielschwachstelleninformationen:
Extrahieren eines NODE.JS-Komponentennamens aus den NODE.JS-Schlüsselinformationen; und
Formieren der ersten Zielschwachstelleninformationen in einer Tabelle, um durch Überprüfung doppelte Informationen zu entfernen, um eine Eins-zu-eins-Entsprechung zwischen dem NODE.JS-Komponentennamen und den CPE-Informationen zu bestimmen.

## Revendications

1. Procédé de détection de vulnérabilités de composants NODE.JS, comprenant les étapes suivantes :
la collecte de premières informations de vulnérabilité de base à partir d'une base de données de vulnérabilités NODE.JS (S100) ;
l'analyse d'un fichier package.json pour obtenir des informations clés du composant NODE.JS (S200) ; l'extraction des premières informations de vulnérabilité cible à partir des premières informations de vulnérabilité de base en fonction des informations clés du composant NODE.JS (S300) ; et la compilation des premières informations de vulnérabilité cible ;
**caractérisé en ce que** l'extraction des premières informations de vulnérabilité cible à partir des premières informations de vulnérabilité de base en fonction des informations clés du composant NODE.JS comprend les étapes suivantes :
la définition d'une priorité d'informations clés en fonction de la pertinence des informations clés (S310) ;
l'acquisition d'informations CVE pour collecter des informations CPE (S320) ; et
la mise en correspondance des informations clés du composant NODE.JS avec les informations CPE en fonction de la priorité des informations clés pour générer des premières informations de vulnérabilité cible (S330) ; et
**caractérisé en ce qu'**après la mise en correspondance des informations clés du composant NODE.JS avec les informations CPE pour générer des premières informations de vulnérabilité cible, le procédé comprend en outre les étapes suivantes :
l'extraction d'un nom de composant NODE.JS à partir des informations clés NODE.JS ; et la formation des premières informations de vulnérabilité cible dans une table pour supprimer les informations en double par audit, pour déterminer une correspondance biunivoque entre le nom du composant NODE.JS et les informations CPE.

2. Procédé de détection de vulnérabilités de composants NODE.JS selon la revendication 1, **caractérisé en ce qu'**après l'extraction des premières informations de vulnérabilité cible à partir des premières informations de vulnérabilité de base en fonction des informations clés du composant NODE.JS, le procédé comprend les étapes suivantes :
le calcul d'une valeur de hachage codée sha1 du composant NODE.JS (S410) ; et
la mise en correspondance de la valeur de hachage codée sha1 du composant NODE.JS avec les premières informations de vulnérabilité cible de NODE.JS pour générer des troisièmes informations de vulnérabilité cible (S420).

3. Procédé de détection de vulnérabilités de composants NODE.JS selon la revendication 1, **caractérisé en ce qu'**après la génération des premières informations de vulnérabilité cible, le procédé comprend en outre les étapes suivantes :
l'appel d'une interface du composant NODE.JS pour acquérir des deuxièmes informations de vulnérabilité cible à partir du fichier package.json.

4. Procédé de détection de vulnérabilités de composants NODE.JS selon la revendication 3, **caractérisé en ce que** les informations clés du composant NODE.JS comprennent des informations de nom du composant NODE.JS et des informations de version du composant NODE.JS, et qu'après l'acquisition des deuxièmes informations de vulnérabilité cible, le procédé comprend en outre les étapes suivantes :
l'organisation des informations de vulnérabilité npm en utilisant retirejs pour obtenir les deuxièmes informations de vulnérabilité de base (S350) ; et
la mise en correspondance des informations de nom du composant NODE.JS et des informations de version du composant NODE.JS avec les deuxièmes informations de vulnérabilité de base pour générer des troisièmes informations de vulnérabilité cible (S360).

5. Procédé de détection de vulnérabilités de composants NODE.JS selon la revendication 4, **caractérisé en ce qu'**après la génération des troisièmes informations de vulnérabilité cible, le procédé comprend en outre les étapes suivantes :
le téléchargement régulier du fichier retirejs mis à jour afin d'analyser les troisièmes informations de vulnérabilité cible et de générer les quatrièmes informations de vulnérabilité cible.

6. Procédé de détection de vulnérabilités de composants NODE.JS selon la revendication 1, **caractérisé en ce que** l'extraction des premières informations de vulnérabilité cible à partir des premières informations de vulnérabilité de base en fonction des informations clés du composant NODE.JS comprend spécifiquement :
l'acquisition des informations de version, des noms de produits et des informations de fournisseur en fonction des informations clés du composant NODE.JS ;
la mise en correspondance des informations de version, des noms de produits et des informations de fournisseur avec les informations CPE respectivement pour obtenir des informations de correspondance ; et l'extraction des informations CVE correspondantes selon les informations de correspondance, les informations CVE comprenant un numéro CVE.

7. Procédé de détection de vulnérabilités de composants NODE.JS selon la revendication 4, **caractérisé en ce que** les troisièmes informations de vulnérabilité cible contiennent un ou plusieurs types d'informations de vulnérabilité, des informations de numéro de version, des informations de niveau de danger et des informations CVE.

8. Système de détection de vulnérabilités de composants NODE.JS, comprenant les modules suivants :
un module de collecte (100), configuré pour collecter des premières informations de vulnérabilité de base à partir d'une base de données de vulnérabilité NODE.JS ;
un module d'analyse (200), configuré pour analyser un fichier package.json afin d'obtenir des informations clés d'un composant NODE.JS ; et
un module de génération (300), configuré pour extraire des premières informations de vulnérabilité cible à partir des premières informations de vulnérabilité de base en fonction des informations clés du composant NODE.JS et compiler les premières informations de vulnérabilité cible ;
**caractérisé en ce que** l'extraction des premières informations de vulnérabilité cible à partir des premières informations de vulnérabilité de base en fonction des informations clés du composant NODE.JS comprend : la définition d'une priorité d'informations clés en fonction de la pertinence des informations clés (S310) ;
l'acquisition d'informations CVE pour collecter des informations CPE (S320) ; et
la mise en correspondance des informations clés du composant NODE.JS avec les informations CPE en fonction de la priorité des informations clés pour générer des premières informations de vulnérabilité cible (S330) ; et
**caractérisé en ce qu'**après la mise en correspondance des informations clés du composant NODE.JS avec les informations CPE pour générer des premières informations de vulnérabilité cible :
l'extraction d'un nom de composant NODE.JS à partir des informations clés NODE.JS ; et la formation des premières informations de vulnérabilité cible dans une table pour supprimer les informations en double par audit, pour déterminer une correspondance biunivoque entre le nom du composant NODE.JS et les informations CPE.
